# EUROPEAN PATENT SPECIFICATION

(11) **EP 2 569 212 B1**
(45) Date of publication and mention of the grant of the patent: **03.09.2014**
(21) Application number: 10851487.8
(22) Date of filing: 12.05.2010
(51) Int. Cl.: B62D 55/04, B62D 55/20

(54) **TRACK SECTION WITH TWO LATERAL SUPPORT MEMBERS AND METHOD FOR PRODUCING A SUPPORT MEMBER FOR SUCH A TRACK SECTION**
RAUPENKETTENABSCHNITT MIT ZWEI SEITLICHEN STÜTZELEMENTEN UND VERFAHREN ZUR HERSTELLUNG EINES STÜTZELEMENTS FÜR SOLCH EINEN RAUPENKETTENABSCHNITT
SECTION CHENILLE POURVUE DE DEUX ÉLÉMENTS DE SUPPORT LATÉRAUX ET PROCÉDÉ DE PRODUCTION D'UN ÉLÉMENT DE SUPPORT POUR UNE TELLE SECTION CHENILLE

(43) Date of publication of application: 20.03.2013
(73) Proprietor: Olofsfors AB, 914 91 Nordmaling (SE)
(72) Inventor: BURSTRÖM, Lennart, S-914 31 Nordmaling (SE)
(74) Representative: Löfgren, Jonas
(86) International application number: PCT/SE2010/050524
(87) International publication number: WO 2011/142701

(56) References cited:
- WO-A1-94/16934
- WO-A1-99/37525
- US-A- 2 764 212
- US-A- 4 810 043
- US-B1- 6 267 453

## Description

### FIELD OF THE INVENTION AND PRIOR ART

The present invention relates to a track section according to the preamble of claim 1, which is adapted to be linked to a plurality of similar track sections to form a flexible track belt for mounting around the outer periphery of vehicle tyres. The invention also relates to a method for producing a support member for such a track section.

Track belts which may be removably mounted around tyres of vehicles are known in several different designs. Such a track belt can be used in order to obtain better friction and traction between the vehicle tyres and the ground for a vehicle, particularly on wet, slippery or muddy terrain, or in order to increase the carrying capacity of a vehicle.

A track section according to the preamble of claim 1 is previously known from WO 99/37525 A1.

### OBJECT OF THE INVENTION

The object of the present invention is to provide a track section of the above-mentioned type having a new and favourable design.

### SUMMARY OF THE INVENTION

According to the invention, said object is achieved by a track section having the features defined in claim 1.

The track section according to the invention comprises a crossbar member and two lateral support members mounted to the crossbar member at opposite ends thereof, the support members protruding on the same side of the crossbar member and being spaced apart to allow a tyre to be received between the support members with the crossbar member extending across the envelope surface of the tyre and with the support members facing a respective one of the two opposed sidewalls of the tyre. Each support member has a first side facing the other support member and an opposite second side facing away from the other support member, a support surface being provided on said first side of the respective support member for engagement with the outer surface of a tyre received between the support members. At least one of the support members, preferably both of them, has an inner stem part, through which the support member is connected to the crossbar member, and an outer head part, which is connected to the stem part and which is wider than the stem part as seen in a direction corresponding to the longitudinal direction of the track belt. The support surface of said at least one support member bulges laterally in opposite directions at the part of the support member where the stem part meets the head part, so as to form a support surface section on the head part which is wider than an adjacent support surface section on the stem part as seen in said direction.

Owing to the fact that the head part is wider than the stem part, a widened support surface section can be provided on the head part without increasing the width of the inner part of the support member through which the support member is connected to the crossbar member. An increased width of said inner part of the support member would give an increased width of the track section and thereby a larger distance between the crossbar members of the track belt formed by several interconnected track sections, which in its turn could reduce the efficiency of the track belt. With the solution according to the present invention, the support member can be given an increased support surface area without increasing the width of the track section and without increasing the height of the support member. An increased support surface area will give an increased area of the contact surface between the support member and the tyre and thereby a reduced surface pressure on the tyre from the support member, which in its turn will reduce the wear on the tyre caused by the support member.

According to an embodiment of the invention, said at least one support member is formed by deep drawing of a blank of steel sheet having a thickness of 6-12 mm, preferably 7-9 mm. Hereby, the support member can be produced in a quick, simple and cost-effective manner.

Further advantages as well as advantageous features of the track section according to the invention will appear from the following description and the dependent claims.

The invention also relates to a method for producing a support member for a track section, wherein a blank of steel sheet having a thickness of 6-12 mm, preferably 7-9 mm, is subjected to deep drawing so as to thereby form the support member.

With the method according to the invention, the support members can be produced in a quick, simple and cost-effective manner.

According to an embodiment of the invention, the blank is heated before and/or during the deep drawing to a temperature of 900-1200°C. Hereby, the deep drawing of the blank is facilitated.

Further advantages as well as advantageous features of the method according to the invention will appear from the following description and the dependent claims.

### BRIEF DESCRIPTION OF THE DRAWING

With reference to the appended drawing, a specific description of preferred embodiments of the invention cited as examples follows below. In the drawings:
- Fig 1: is a perspective view of a track section according to an embodiment of the present invention,
- Fig 2: is a lateral view of the track section of Fig 1,
- Fig 3: shows a part of the track section of Fig 1, as seen from one end of the track section,
- Fig 4: is a perspective view of a support member included in the track section of Fig 1,
- Fig 5: is a perspective view of the support member of Fig 4, as seen from the rear side,
- Fig 6: is a rear view of the support member of Fig 4,
- Fig 7: is a lateral view of the support member of Fig 4,
- Fig 8: shows a part of a track belt formed of interconnected track sections of the type illustrated in Figs 1-3, with the track belt mounted around the outer periphery of vehicle tyres, and
- Figs 9a-d: schematically illustrates different steps in a method for producing a support member of the type illustrated in Figs 4-7.

### DETAILED DESCRIPTION OF PREFERRED EMBODIMENTS OF THE INVENTION

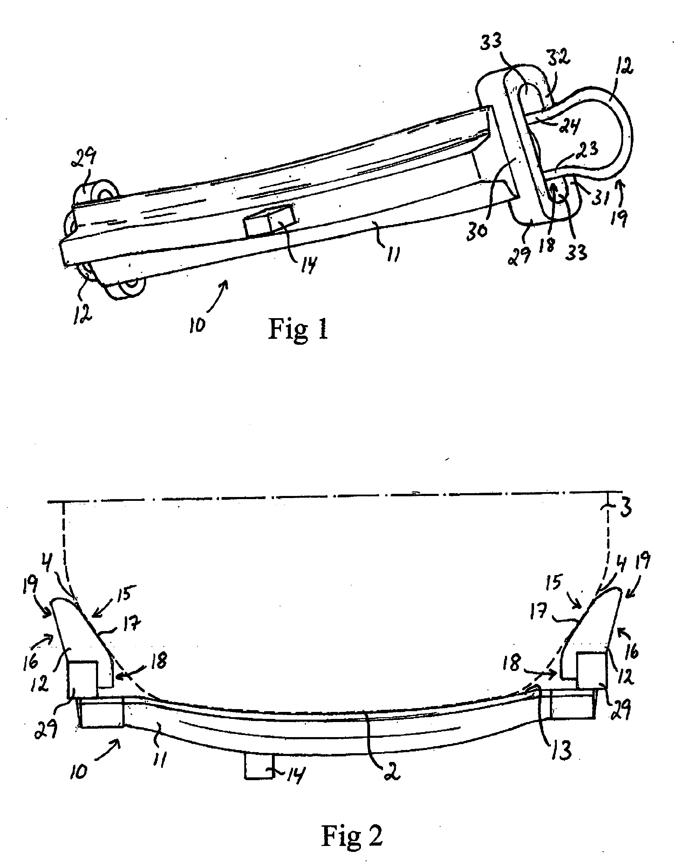

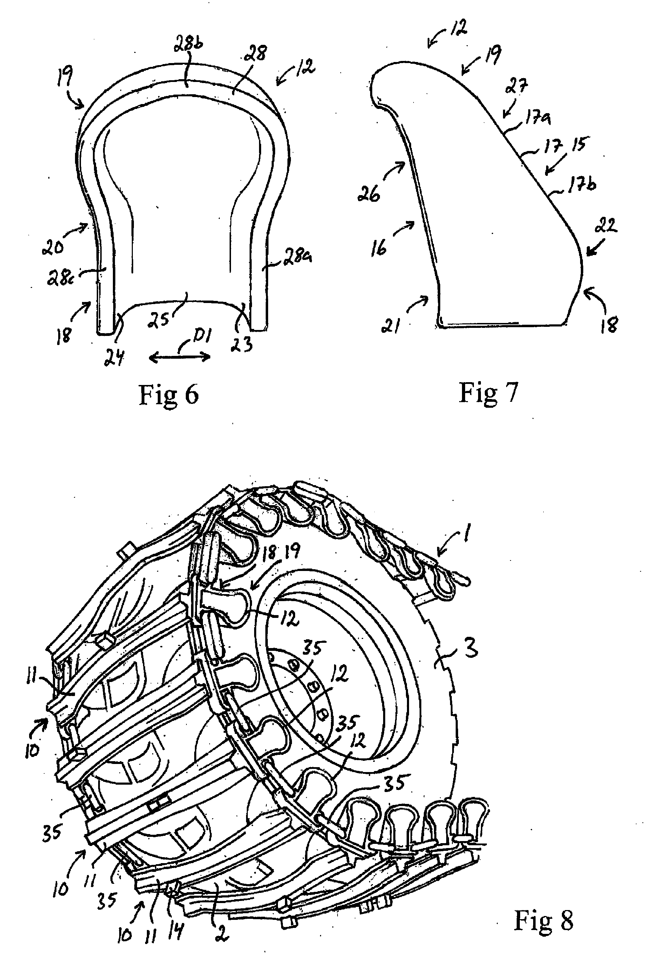

A track section 10 according to an embodiment of the present invention is illustrated in Figs 1-3. This track section 10 is to be linked to a plurality of similar track sections to form a flexible track belt 1 (see Fig 8) for mounting around the outer periphery of vehicle tyres. The track section 10 comprises an elongated crossbar member 11 and two lateral support members 12 mounted to the crossbar member 11 at opposite ends thereof.

The crossbar member 11 has an essentially smooth inside 13 for engagement with the envelope surface 2 of a vehicle tyre 3. In order to improve the grip against the ground, one or more gripping pegs 14 may be provided on the outside of the crossbar member 11, as illustrated in Figs 1 and 2. In the illustrated embodiment, the crossbar member 11 is formed by an elongated rigid beam having an essentially T-shaped cross-sectional shape. However, the crossbar member 11 may have any other suitable design.

The support members 12 protrude on the inside 13 of the crossbar member 11. The support members 12 are spaced apart to allow a tyre 3 to be received between the support members 12 with the crossbar member 11 extending across the envelope surface 2 of the tyre 3 and with the support members 12 facing a respective one of the two opposed sidewalls 4 of the tyre, as illustrated in Fig 2, where the lower part of a tyre 3 is illustrated in broken lines. Each support member 12 has a first side 15 facing the other support member and an opposite second side 16 facing away from the other support member. A support surface 17 is provided on said first side 15 of the respective support member for engagement with the outer surface of a tyre 3 received between the support members 12.

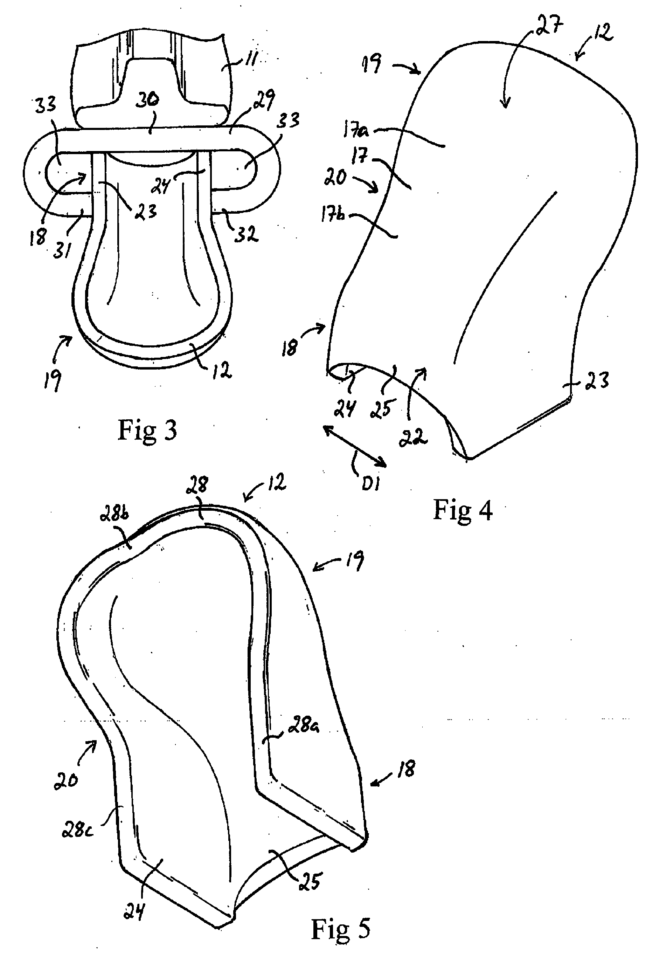

The design of the support members 12 is shown in closer detail in Figs 4-7. The respective support member 12 has an inner stem part 18, through which the support member 12 is connected to the crossbar member 11, and an outer head part 19, which is connected to the stem part 18 and which is wider than the stem part as seen in a direction D1 corresponding to the longitudinal direction of the track belt 1 to be formed by a number of interconnected track sections 10, i.e. the intended running direction of the track belt. This direction D1 is indicated by an arrow in Figs 4 and 6. The support surface 17 of the support member bulges laterally in opposite directions at the part 20 of the support member where the stem part 18 meets the head part 19, so as to form a support surface section 17a on the head part 19 which is wider than an adjacent support surface section 17b on the stem part 18 as seen in said direction D1.

The stem part 18 of the respective support member 12 has a U-shaped cross-sectional shape. The open side 21 of the stem part 18 faces away from the other support member, whereas the opposite closed side 22 faces the other support member. The stem part 18 has two essentially parallel lateral walls 23, 24 extending at a distance from each other and an intermediate wall 25 extending between the lateral walls on said closed side 22 of the stem part. The above-mentioned narrower support surface section 17b is provided on the intermediate wall 25.

The head part 19 of the respective support member 12 is hood-shaped with an open side 26 facing away from the other support member and an opposite closed side 27 facing the other support member. The above-mentioned wider support surface section 17a is provided on said closed side 27.

The respective support member 12 can be said to be scoop-shaped and has a rim 28 formed by the essentially straight edge 28a of the first lateral wall 23 of the stem part, the arc-shaped edge 28b of the head part 19 and the essentially straight edge 28c of the second lateral wall 23 of the stem part.

The support surface 17 of the respective support member 12 is inclined away from the other support member as seen in the direction from the inner end of the support surface towards the outer end thereof, as illustrated in Figs 2 and 7.

In the illustrated example, the respective support member 12 is secured to an end of the crossbar member 11 through a C-shaped connection member 29, a so-called link hook, which is secured to the crossbar member 11 by welding. The stem part 18 of the support member 12 rests against a base part 30 of the connection member 29 through the inner edges of the lateral walls 23, 24 and is secured to this base part 30 by welding. A first end 31 of the connection member 29 is secured to a first lateral wall 23 of the stem part 18 by welding and the other end 32 of the connection member 29 is secured to the other lateral wall 24 of the stem part 18 by welding. Hereby, a first opening 33 for receiving a first link element 35 is formed on a first side of the support member 12 between the first lateral wall 23 of the stem part 18 and the connection member 29 and a second opening 33 for receiving a second link element 35 is formed on the opposite side of the support member 12 between the other lateral wall 24 of the stem part 18 and the connection member 29.

Several track sections 10 of the type described above are interconnected by means of link elements 35 to form a flexible track belt 1, as illustrated in Fig 8. The respective link element 35 is received in an opening 33 of a connection member 29 of a first track section 10 and in an opening 33 of a connection member 29 of another adjacent track section 10. The link elements 35 will act as hinges between the track sections 10. The track section 1 is mounted around the outer periphery of two or more vehicle tyres 3 with the crossbar members 11 extending in the cross-direction of the tyres and with the support members 12 facing the tyres, as illustrated in Fig 8. The support members 12 will keep the track belt 1 correctly positioned on the tyres 3 and will prevent the track belt 1 from slipping of the tyres 3. At the part of a tyre 3 that bears against the ground, the opposed sidewalls 4 of the tyre will bulge due to the load from the vehicle and the sidewalls 4 will thereby come into contact with the support surfaces 17 of the two opposed support members 12 of a track section 10 received between the tyre 3 and the ground, as illustrated in Fig 2.

The respective support member 12 is formed by deep drawing of a blank 40 of steel sheet. The blank 40 is formed by being cut out from a steel sheet having a thickness of 6-12 mm, preferably 7-9 mm. The blank 40 is heated before and/or during the deep drawing to a temperature of 900-1200°C.

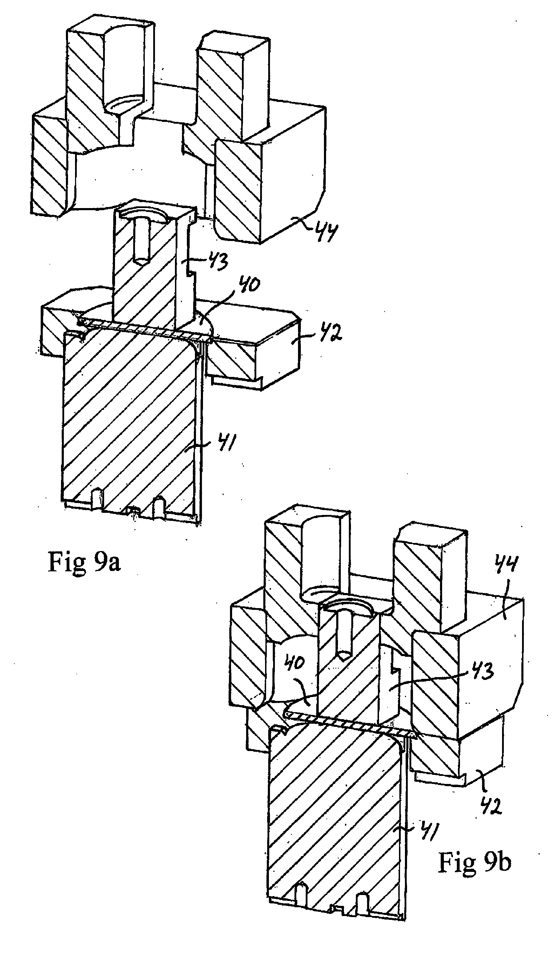

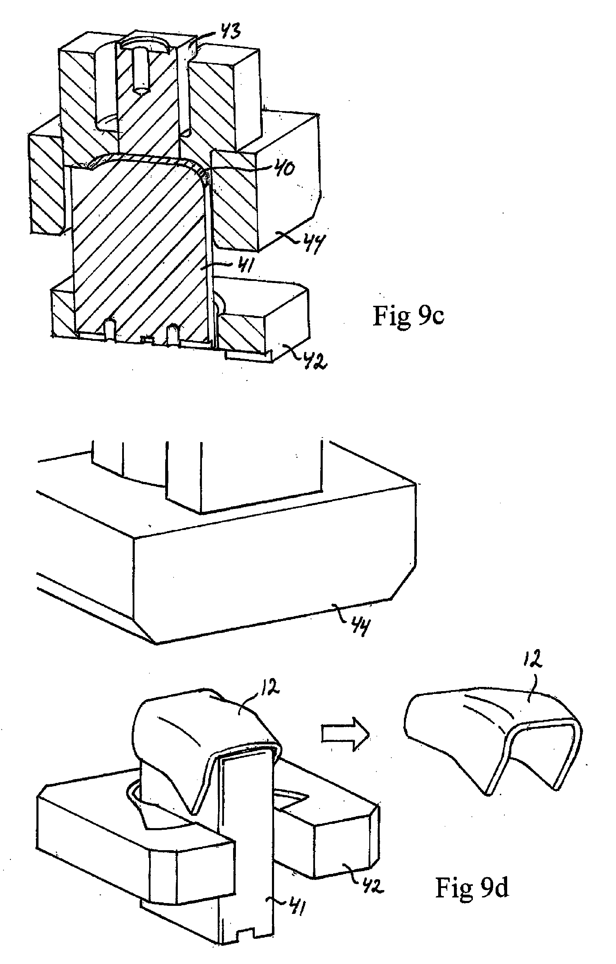

Different steps in a deep drawing process for forming a support member 12 of the type described above are illustrated in Figs 9a-9d. In a first step, a blank 40 having a thickness of 8 mm and heated to a temperature of approximately 950°C is placed on the upper end of a punch 41 with the edges of the blank resting against a lower die 42, as illustrated in Fig 9a. A holding member 43 is pressed against the upper surface of the blank 40 in order to keep the blank in place on the punch 41. Thereafter, an upper die 44 is pressed against the edges of the blank 40 and against the lower die 42 (see Fig 9b) so as to shape the edges of the blank and give these edges a somewhat rounded shape. The lower die 42 is then lowered and moved away from the upper die, as illustrated in Fig 9c, whereupon the upper die 44 is moved downwards in relation to the punch 41 so as to subject the blank 40 to deep drawing for the final shaping of a support member 12 having the design described above. Thereafter, the upper die 44 and the holding member 43 are moved upwards away from the support member 12 and the punch 41, and the lower die 42 is moved upwards in relation to the punch 41 in order to push the support member 12 upwards and thereby release the support member 12 from the punch 41, as illustrated in Fig 9d. The support member 12 is finally quenched by being immersed in water or any other suitable quenching medium.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A track section adapted to be linked to a plurality of similar track sections to form a flexible track belt for mounting around the outer periphery of vehicle tyres, wherein the track section comprises a crossbar member (11) and two lateral support members (12) mounted to the crossbar member (11) at opposite ends thereof, the support members (12) protruding on the same side of the crossbar member (11) and being spaced apart to allow a tyre to be received between the support members (12) with the crossbar member (11) extending across the envelope surface of the tyre and with the support members (12) facing a respective one of the two opposed sidewalls of the tyre, each support member (12) having a first side (15) facing the other support member and an opposite second side (16) facing away from the other support member, a support surface (17) being provided on said first side (15) of the respective support member for engagement with the outer surface of a tyre received between the support members,
**characterized in:**
- **that** at least one of the support members (12), preferably both of them, has an inner stem part (18), through which the support member (12) is connected to the crossbar member (11), and an outer head part (19), which is connected to the stem part (18) and which is wider than the stem part as seen in a direction (D1) corresponding to the longitudinal direction of the track belt; and
- **that** the support surface (17) of said at least one support member bulges laterally in opposite directions at the part of the support member where the stem part (18) meets the head part (19), so as to form a support surface section (17a) on the head part (19) which is wider than an adjacent support surface section (17b) on the stem part (18) as seen in said direction (D1).

2. A track section according to claim 1, **characterized in, that** the stem part (18) of said at least one support member has a U-shaped cross-sectional shape, the open side (21) of the stem part (18) facing away from the other support member and the opposite closed side (22) of the stem part facing the other support member.

3. A track section according to claim 2, **characterized in, that** the stem part (18) has two essentially parallel lateral walls (23, 24) extending at a distance from each other and an intermediate wall (25) extending between the lateral walls on said closed side (22) of the stem part, said narrower support surface section (17b) being provided on this intermediate wall (25).

4. A track section according to any of claims 1-3, **characterized in, that** the head part (19) of said at least one support member is hood-shaped with an open side (26) facing away from the other support member and an opposite closed side (27) facing the other support member, said wider support surface section (17a) being provided on this closed side (27).

5. A track section according to any of claims 1-4, **characterized in that** the support surface (17) of said at least one support member is inclined away from the other support member as seen in the direction from the inner end of the support surface towards the outer end thereof.

6. A track section according to any of claims 1-5, **characterized in that** said at least one support member (12) is formed by deep drawing of a blank of steel sheet having a thickness of 6-12 mm, preferably 7-9 mm.

7. A method for producing a support member for a track section according to any of claims 1-6, **characterized in that** a blank (40) of steel sheet having a thickness of 6-12 mm, preferably 7-9 mm, is subjected to deep drawing so as to thereby form the support member (12).

8. A method according to claim 7, **characterized in that** the blank (40) is cut out from a steel sheet having a thickness of 6-12 mm, preferably 7-9 mm.

9. A method according to claim 7 or 8, **characterized in that** the blank (40) is heated before and/or during the deep drawing to a temperature of 900-1200°C.

10. A method according to claim 9, **characterized in that** the formed support member (12) is quenched by being immersed in a quenching medium.

## Patentansprüche

1. Raupenkettenabschnitt, der dazu geeignet ist, mit einer Vielzahl von ähnlichen Raupenkettenabschnitten verbunden zu werden, um ein flexibles Raupenkettenband zur Montage um den Außenumfang von Fahrzeugreifen zu bilden, wobei der Raupenkettenabschnitt ein Querstangenelement (11) und zwei seitliche Stützelemente (12), die an dem Querstangenelement (11) an entgegengesetzten Enden von diesem montiert sind, aufweist, wobei die Stützelemente (12) auf der gleichen Seite des Querstangenelements (11) hervorstehen und voneinander beabstandet sind, damit ein Reifen zwischen den Stützelementen (12) aufgenommen werden kann, wobei sich das Querstangenelement (11) über die Mantelfläche des Reifens erstreckt und die Stützelemente (12) zu einer jeweiligen Seitenwand der beiden gegenüberliegenden Seitenwände des Reifens weisen, wobei jedes Stützelement (12) eine erste Seite (15), die zu dem anderen Stützelement weist, und eine gegenüberliegende zweite Seite (16), die von dem anderen Stützelement weg weist, aufweist, wobei eine Stützfläche (17) zum Eingriff mit der Außenfläche eines zwischen den Stützelementen aufgenommenen Reifens an der ersten Seite (15) des jeweiligen Stützelementes vorgesehen ist,
**dadurch gekennzeichnet:**
- **dass** mindestens eines der Stützelemente (12), vorzugsweise beide, einen inneren Schaftteil (18), durch welchen das Stützelement (12) mit dem Querstangenelement (11) verbunden ist, und einen äußeren Kopfteil (19) aufweist, der mit dem Schaftteil (18) verbunden und breiter ist als der Schaftteil, gesehen in einer Richtung (D1) entsprechend der Längsrichtung des Raupenkettenbands; und
- **dass** sich die Stützfläche (17) des mindestens einen Stützelements in entgegengesetzte Richtungen seitlich an dem Teil des Stützelements ausbaucht, an dem der Schaftteil (18) auf den Kopfteil (19) trifft, um einen Stützflächenabschnitt (17a) an dem Kopfteil (19) zu bilden, der breiter ist als ein angrenzender Stützflächenabschnitt (17b) an dem Schaftteil (18), wie in der Richtung (D1) gesehen.

2. Raupenkettenabschnitt nach Anspruch 1, **dadurch gekennzeichnet, dass** der Schaftteil (18) des mindestens einen Stützelements eine U-förmige Querschnittform aufweist, wobei die offene Seite (21) des Schaftteils (18) von dem anderen Stützelement weg weist und die gegenüberliegende geschlossene Seite (22) des Schaftteils zu dem anderen Stützelement weist.

3. Raupenkettenabschnitt nach Anspruch 2, **dadurch gekennzeichnet, dass** der Schaftteil (18) zwei im Wesentlichen parallele Seitenwände (23, 24), die sich in einem Abstand zueinander erstrecken, und eine Zwischenwand (25) aufweist, die sich auf der geschlossenen Seite (22) des Schaftteils zwischen den Seitenwänden erstreckt, wobei der schmälere Stützflächenabschnitt (17b) an dieser Zwischenwand (25) vorgesehen ist.

4. Raupenkettenabschnitt nach einem der Ansprüche 1 - 3, **dadurch gekennzeichnet, dass** der Kopfteil (19) des mindestens einen Stützelements haubenförmig ist, wobei eine offene Seite (26) von dem anderen Stützelement weg weist und eine gegenüberliegende geschlossene Seite (27) zu dem anderen Stützelement weist, wobei der breitere Stützflächenabschnitt (17a) an dieser geschlossenen Seite (27) vorgesehen ist.

5. Raupenkettenabschnitt nach einem der Ansprüche 1 - 4, **dadurch gekennzeichnet, dass** die Stützfläche (17) des mindestens einen Stützelements gesehen in Richtung von dem inneren Ende der Stützfläche zu dem äußeren Ende von diesem von dem anderen Stützelement weg geneigt ist.

6. Raupenkettenabschnitt nach einem der Ansprüche 1 - 5, **dadurch gekennzeichnet, dass** das mindestens eine Stützelement (12) durch Tiefziehen eines Stahlblechrohlings mit einer Dicke von 6 - 12 mm, vorzugsweise 7 - mm, gebildet ist.

7. Verfahren zur Herstellung eines Stützelements für einen Raupenkettenabschnitt nach einem der Ansprüche 1 - 6, **dadurch gekennzeichnet, dass** ein Stahlblechrohling (40) mit einer Dicke von 6 - 12 mm, vorzugsweise 7 - 9 mm, einem Tiefziehen unterworfen wird, um dadurch das Stützelement (12) zu bilden.

8. Verfahren nach Anspruch 7, **dadurch gekennzeichnet, dass** der Rohling (40) aus einem Stahlblech mit einer Dicke von 6 - 12 mm, vorzugsweise 7 - 9 mm, ausgeschnitten wird.

9. Verfahren nach Anspruch 7 oder 8, **dadurch gekennzeichnet, dass** der Rohling (40) vor und/oder während des Tiefziehens auf eine Temperatur von 900 - 1200°C erwärmt wird.

10. Verfahren nach Anspruch 9, **dadurch gekennzeichnet, dass** das gebildete Stützelement (12) durch Eintauchen in ein Abschreckmedium abgeschreckt wird.

## Revendications

1. Section de chenille adaptée pour être reliée à une pluralité de sections de chenille similaires afin de former une courroie de chenille souple destinée à être montée autour de la périphérie externe des pneus de véhicule, dans laquelle la section de chenille comprend un élément de traverse (11) et deux éléments de support latéraux (12) montés sur l'élément de traverse (11) au niveau de ses extrémités opposées, les éléments de support (12) faisant saillie du même côté de l'élément de traverse (11) et étant espacés pour permettre de recevoir un pneu entre les éléments de support (12) avec l'élément de traverse (11) qui s'étend sur la surface d'enveloppe du pneu et avec les éléments de support (12) qui font face à l'une des deux parois latérales du pneu, chaque élément de support (12) ayant un premier côté (15) faisant face à l'autre élément de support et un second côté (16) opposé étant orienté à l'opposé de l'autre élément de support, une surface de support (17) étant prévue sur ledit premier côté (15) de l'élément de support respectif pour la mise en prise avec la surface externe d'un pneu reçu entre les éléments de support, **caractérisée :**
**en ce qu'**au moins l'un des éléments de support (12), de préférence les deux, a une partie de tige interne (18), par le biais de laquelle l'élément de support (12) est raccordé à l'élément de traverse (11) et une partie de tête externe (19) qui est raccordée à la partie de tige (18) et qui est plus large que la partie de tige, comme observé dans une direction (D1) correspondant à la direction longitudinale de la courroie de chenille ; et
**en ce que** la surface de support (17) dudit élément de support fait saillie latéralement dans des directions opposées au niveau de la partie de l'élément de support où la partie de tige (18) rencontre la partie de tête (19), afin de former une section de surface de support (17a) sur la partie de tête (19) qui est plus large qu'une section de surface de support (17b) adjacente sur la partie de tige (18), comme observé dans ladite direction (D1).

2. Section de chenille selon la revendication 1, **caractérisée en ce que** la partie de tige (18) dudit au moins un élément de support a une forme transversale en forme de U, le côté ouvert (21) de la partie de tige (18) étant orienté à l'opposé de l'autre élément de support et le côté fermé (22) opposé de la partie de tige faisant face à l'autre élément de support.

3. Section de chenille selon la revendication 2, **caractérisée en ce que** la partie de tige (18) a deux parois latérales (23, 24) essentiellement parallèles s'étendant à une distance l'une de l'autre et une paroi intermédiaire (25) s'étendant entre les parois latérales sur ledit côté fermé (22) de la partie de tige, ladite section de surface de support (17b) plus étroite étant prévue sur cette paroi intermédiaire (25).

4. Section de chenille selon l'une quelconque des revendications 1 à 3, **caractérisée en ce que** la partie de tête (19) dudit au moins un élément de support est en forme de capuchon avec un côté ouvert (26) orienté à l'opposé de l'autre élément de support et un côté fermé (27) opposé faisant face à l'autre élément de support, ladite section de surface de support (17a) plus large étant prévue sur ce côté fermé (27).

5. Section de chenille selon l'une quelconque des revendications 1 à 4, **caractérisée en ce que** la surface de support (17) dudit au moins un élément de support est inclinée à distance de l'autre élément de support, comme observé dans la direction allant de l'extrémité interne de la surface de support à son extrémité externe.

6. Section de chenille selon l'une quelconque des revendications 1 à 5, **caractérisée en ce que** ledit au moins un élément de support (12) est formé par emboutissage profond d'une ébauche de tôle en acier ayant une épaisseur de 6 à 12 mm, de préférence de 7 à 9 mm.

7. Procédé pour produire un élément de support pour une section de chenille selon l'une quelconque des revendications 1 à 6, **caractérisé en ce qu'**une ébauche (40) de tôle d'acier ayant une épaisseur de 6 à 12 mm, de préférence de 7 à 9 mm, est soumise à l'emboutissage profond afin de former ainsi l'élément de support (12).

8. Procédé selon la revendication 7, **caractérisé en ce que** l'ébauche (40) est découpée dans une tôle d'acier ayant une épaisseur de 6 à 12 mm, de préférence de 7 à 9 mm.

9. Procédé selon la revendication 7 ou 8, **caractérisé en ce que** l'ébauche (40) est chauffée avant et/ou pendant l'emboutissage profond à une température de 900 à 1200°C.

10. Procédé selon la revendication 9, **caractérisé en ce que** l'élément de support (12) formé est trempé en étant immergé dans un milieu de trempe.
